# EUROPÄISCHE PATENTSCHRIFT

(11) **EP 3 669 631 B1**
(45) Veröffentlichungstag und Bekanntmachung des Hinweises auf die Patenterteilung: **02.03.2022**
(21) Anmeldenummer: 19202896.7
(22) Anmeldetag: 14.10.2019
(51) Int. Cl.: A01D 41/12, B60R 3/00

(54) **SELBSTFAHRENDER MÄHDRESCHER SOWIE VERFAHREN ZUR WARTUNG EINES KORNTANKS**
SELF-PROPELLED COMBINE AND METHOD FOR MAINTAINING A GRAIN TANK
MOISSONNEUSE-BATTEUSE AUTOMOTRICE AINSI QUE PROCÉDÉ D'ENTRETIEN D'UNE TRÉMIE

(30) Priorität: 20.12.2018 DE 102018133142
(43) Veröffentlichungstag der Anmeldung: 24.06.2020
(73) Patentinhaber: CLAAS Selbstfahrende Erntemaschinen GmbH, 33428 Harsewinkel (DE)
(72) Erfinder: Alterbaum, Andreas, 49186 Bad Iburg (DE); Martens, Matthias, 48231 Warendorf (DE); Beyer, David, 48301 Nottuln (DE)
(74) Vertreter: CLAAS Gruppe

(56) Entgegenhaltungen:
- EP-A1- 2 258 160
- EP-A1- 2 605 633
- EP-B1- 2 605 633
- US-A- 3 246 313
- US-A- 3 503 533

## Beschreibung

Die vorliegende Anmeldung betrifft einen selbstfahrenden Mähdrescher gemäß dem Oberbegriff von Anspruch 1. Weiterhin betrifft die vorliegende Anmeldung ein Verfahren zur Wartung eines Korntanks eines Mähdreschers gemäß Anspruch 15.

Der selbstfahrende Mähdrescher umfasst ein Gehäuse, mittels dessen zumindest eine Vielzahl von Arbeitsorganen des Mähdreschers räumlich eingefasst und auf diese Weise von einer Umgebung abgetrennt ist. Innerhalb des Gehäuses ist insbesondere ein Dreschorgan angeordnet, mittels dessen von geschnittenen Pflanzen Früchte ablösbar sind, sodass die Früchte anschließend losgelöst von Pflanzenresten der geschnittenen Pflanzen vorliegen. Dies ist erforderlich, um die Früchte schließlich gesondert von den Pflanzenresten zusammenzutragen, während die Pflanzenreste in aller Regel an einem rückwärtigen Ende des Mähdreschers ausgeworfen werden. Zum Schneiden der Pflanzen verfügt der Mähdrescher typischerweise über ein an seinem vorderen Ende angeordnetes Schneidorgan, mittels dessen die Pflanzen in Bodennähe des jeweiligen Untergrundes abschneidbar sind. Diese Pflanzen werden sodann - typischerweise mittels eines Schrägförderers - dem Dreschorgan zugeführt. Zwecks Trennung der abgelösten Früchte von den verbleibenden Pflanzenresten verfügt der Mähdrescher ferner in aller Regel über ein Trennorgan, das beispielsweise in Form eines Hordenschüttlers ausgebildet sein kann. Die abgelösten und separierten Früchte können schließlich mittels einer Fördereinrichtung in einen Korntank des Mähdreschers gefördert werden, in dem die Früchte zumindest temporär lagerbar sind. Typischerweise findet eine periodische Entleerung des Korntanks mittels eines schwenkbar an dem Gehäuse des Mähdreschers angeordneten Entladerüssels statt.

Zwecks Wartung des Korntanks bzw. darin befindlicher Bauteile ist es in regelmäßigen Zeitabständen notwendig, den Korntank zu begehen. Letzterer befindet sich normalerweise an einer Oberseite des Mähdreschers bzw. des Gehäuses, sodass ein Zugang zu dem Korntank vorteilhafterweise von dieser Oberseite her erfolgt. Zur Gewährung dieses Zugangs bietet sich typischerweise das Gehäuse des Mähdreschers an, das an seiner Oberseite normalerweise ohnehin eine horizontal orientierte Abdeckung aufweist, die gewissermaßen eine Decke des Gehäuses darstellt. Diese Abdeckung kann als begehbare Plattform genutzt werden, über die der Korntank zugänglich ist. Letzterer ist in aller Regel an seiner Oberseite geöffnet ausgebildet, sodass ein Einstieg in den Korntank ausgehend von der Abdeckung ermöglicht ist.

Da Mähdrescher in aller Regel eine nennenswerte Höhe von mehreren Metern aufweisen, ist es erforderlich, das Besteigen der Abdeckung und mithin den Zugang zu dem Korntank zu sichern. Auf diese Weise wird ein versehentliches Abstürzen eines das Gehäuse besteigenden Maschinenführers reduziert. Eine besonders wichtige Maßnahme zur Absicherung der als Plattform genutzten Abdeckung sind seitliche Geländer, die ein versehentliches Übertreten eines seitlichen Randes der Abdeckung verhindern. Damit derartige Geländer eine Wirkung entfalten können, ist es erforderlich, dass diese vertikal über eine Abdeckebene der Abdeckung hinaus vorstehen. Aufgrund der ohnehin beträchtlichen Höhe typischer Mähdrescher ist dies regelmäßig problematisch, da etwaige Unterführungen auf Grund der zusätzlichen durch derartige Geländer bedingten Bauhöhe des Mähdreschers insgesamt womöglich nicht mehr unterfahren werden können. Zudem sind vielfach Maximalmaße betreffend die Höhe von Mähdreschern gesetzlich geregelt, sodass es gilt, diese Maximalmaße einzuhalten.

Im Umfeld dieser Problemlage schlägt die europäischen Patentanmeldung EP 2 605 633 B1 einen Feldhäcksler vor, der seitliche, zumindest im Wesentlichen vertikal orientierte Wandungsteile des Gehäuses aufweist, die mit einem Bewegungsmechanismus ausgestattet sind. Der Bewegungsmechanismus erlaubt es, besagte Wandungsteile vertikal nach oben zu bewegen. Hierdurch wird eine Doppelfunktion verwirklicht, nämlich zum einen die Schaffung eines Zugangs zu hinter den Wandungsteilen befindlichen Einrichtungen des Feldhäckslers sowie zum anderen die Bereitstellung eines Geländers an der Oberseite des Gehäuses. Mithin werden die Wandungsteile derart weit nach oben bewegt, dass sie in einem beträchtlichen Maß über die Oberseite des Gehäuses hinaus vorstehen und folglich zur Sicherung eines auf die Oberseite des Gehäuses steigenden Maschinenführers dienen können.

Die bekannte Konstruktion ist insoweit nachteilig, als das Besteigen der Oberseite des Gehäuses und mithin der Zugriff auf den Korntank einer erheblichen Vorbereitung bedarf. Schließlich ist es für den Maschinenführer aus Sicherheitsgründen jedes Mal erforderlich, die Wandungsteile des Gehäuses, die von beträchtlicher Größe und mithin beträchtlicher Masse sind, vollständig vertikal nach oben zu bewegen, bevor er schließlich auf die Oberseite des Gehäuses steigen kann. Hierzu ist es zudem notwendig, von dem Feldhäcksler abzusteigen und die Wandungsteile von dem Untergrund aus zu bedienen.

Der vorliegenden Anmeldung liegt nach alldem die Aufgabe zugrunde, eine Sicherung an der oberen Abdeckung des Gehäuses bereitzustellen, die im Vergleich zum Stand der Technik einfacher anwendbar ist.

Die zugrunde liegende Aufgabe wird erfindungsgemäß mittels eines Mähdreschers mit den Merkmalen des Anspruchs 1 gelöst. Vorteilhafte Ausgestaltungen ergeben sich aus den Unteransprüchen 2 bis 14.

Der erfindungsgemäße Mähdrescher ist dadurch gekennzeichnet, dass die Abdeckung an der Oberseite des Gehäuses mindestens einen Festabschnitt und mindestens einen relativ zu dem Festabschnitt bewegbaren Bewegungsabschnitt umfasst. Der Bewegungsabschnitt ist zwischen einer Normalstellung und einer Wartungsstellung bewegbar. Bei Vorliegen in seiner Normalstellung liegt der Bewegungsabschnitt gemeinsam mit dem Festabschnitt in einer Abdeckebene der Abdeckung. Bei Vorliegen in seiner Wartungsstellung steht der Bewegungsabschnitt hingegen über die Abdeckebene hinaus vor. Von wesentlicher Bedeutung ist zudem, dass der Bewegungsabschnitt mit einem Handlaufelement verbunden ist, das zumindest bei Vorliegen des Bewegungsabschnitts in dessen Wartungsstellung in einem von dem Festabschnitt abgewandten Endbereich des Bewegungsabschnitts angeordnet ist.

Die Abdeckung ist vorteilhafterweise plattenförmig ausgebildet, wobei sie - wie nachstehend gesondert erläutert wird - bevorzugt von einer Hohlprofilstruktur gebildet ist. Der Bewegungsabschnitt ist vorteilhafterweise von einem Bereich der Abdeckung gebildet, der relativ zu dem Festabschnitt bewegbar, insbesondere um eine Schwenkachse verschwenkbar, ist. Insbesondere kann der Bewegungsabschnitt falltürartig ausgebildet sein. Der Bewegungsabschnitt ist vorzugsweise unmittelbar mit dem Festabschnitt gekoppelt. Die beschriebene Schwenkachse ist vorzugsweise horizontal ausgerichtet, sodass der Bewegungsabschnitt ausgehend von seiner Normalstellung, die bei dieser Ausgestaltung übereinstimmend mit dem Festabschnitt eine zumindest im Wesentlichen, vorzugsweise vollständig, horizontale Orientierung aufweist, in seine Wartungsstellung überführbar ist, in der der Bewegungsabschnitt aus der Abdeckebene heraus bewegt wird und auf diese Weise über letztere hinaus vorsteht. Insbesondere kann der Bewegungsabschnitt um einen Winkel von 90° relativ zu dem Festabschnitt verschwenkt werden, sodass eine Ebene des in sich eben ausgebildeten Bewegungsabschnitts senkrecht zu der Abdeckebene ausgerichtet ist. Das sich an dem von dem Festabschnitt abgewandten Endbereich des Bewegungsabschnitts angeordnete Handlaufelement befindet sich bei dieser Ausgestaltung folglich bei Vorliegen des Bewegungsabschnitts in seiner Wartungsstellung in einem Abstand von dem Festabschnitt, der zumindest im Wesentlichen einer sich senkrecht zu der Schwenkachse gemessenen Länge des Bewegungsabschnitts entspricht.

Vorteilhafterweise ist der Bewegungsabschnitt derart dimensioniert, dass er bei Vorliegen in seiner Wartungsstellung um mindestens 1,0 m, vorzugsweise mindestens 1,25 m, weiter vorzugsweise mindestens 1,5 m, über den Festabschnitt hinaus vorsteht. Auf diese Weise bildet der Bewegungsabschnitt bei Vorliegen in seiner Wartungsstellung gewissermaßen eine Brüstung, die als temporäre Absturzsicherung für einen auf die Abdeckung steigenden Maschinenführer dient. Das beschriebene Maß erlaubt zudem eine Anordnung des Handlaufelements in einer entsprechenden Höhe oberhalb der Abdeckebene der Abdeckung, sodass das Handlaufelement bequem genutzt werden kann und zur Sicherung zur Verfügung steht.

Vorteilhafterweise umfasst der erfindungsgemäße Mähdrescher mindestens eine Arretiereinrichtung, mittels derer der Bewegungsabschnitt zumindest bei Vorliegen in seiner Wartungsstellung relativ zu dem Festabschnitt arretierbar ist. Auf diese Weise ist sichergestellt, dass der Bewegungsabschnitt bei Vorliegen in seiner Wartungsstellung Kräfte in den Festabschnitt und mithin das Gehäuse des Mähdreschers abtragen kann. Hierdurch wird die Eignung des Bewegungsabschnitts als Brüstung sowie als Träger des Handlaufelements sichergestellt, dessen sich der Maschinenführer bei Besteigen der Abdeckung zur Sicherung bedienen kann.

In einer besonders vorteilhaften Ausgestaltung erstreckt sich das Handlaufelement über den Bewegungsabschnitt hinaus in Richtung des Korntanks. Auf diese Weise kann die erzielte Sicherung mittels Überführung des Bewegungsabschnitts in dessen Wartungsstellung nicht nur im unmittelbaren Wirkungsbereich des Bewegungsabschnitts erzielt werden, sondern darüber hinaus mittels des sich über den Bewegungsabschnitt hinaus erstrecken Handlaufelements idealerweise bis hin zu dem Korntank bereitgestellt werden.

Vorteilhafterweise ist die Abdeckung derart an dem Mähdrescher positioniert, dass sie räumlich an den Korntank grenzt. Auf diese Weise kann der Maschinenführer des Mähdreschers den Korntank unmittelbar über die Abdeckung erreichen. Das heißt dass er beispielsweise mittels einer vorteilhaft an dem Mähdrescher angeordneten Aufstiegseinrichtung von einem unterhalb der Abdeckung befindlichen Höhenniveau auf eine Oberseite der Abdeckung aufsteigen kann, um sodann über die Abdeckung laufend den Korntank zu erreichen. In Kombination mit dem vorstehend beschriebenen Handlaufelement, das sich über den Bewegungsabschnitt hinaus erstreckt, kann der Weg von der Aufstiegseinrichtung bis hin zu den Korntank vollständig mittels des Handlaufelements begleitet werden, sodass dem Maschinenführer auf der gesamten Abdeckung das Handlaufelement zur Sicherung zur Verfügung steht. Da das Beschreiten der Abdeckung auch und insbesondere bei Vorliegen des Bewegungsabschnitts in dessen Wartungsstellung möglich sein muss, ist es von besonderem Vorteil, wenn ein Großteil der Abdeckung von dem Festabschnitt gebildet ist, bevorzugt zu mindestens 70 %, weiter vorzugsweise mindestens 80 %. Der Bewegungsabschnitt bildet demzufolge vorteilhafterweise den kleineren Teil der Abdeckung, der im Zuge der Wartung des Korntanks in seine Wartungsstellung bewegt, vorzugsweise verschwenkt, wird.

In einer weiterhin vorteilhaften Ausgestaltung des erfindungsgemäßen Mähdreschers ist die Abdeckung zumindest teilweise oberhalb einer Verbrennungskraftmaschine des Mähdreschers angeordnet. Bei dieser Ausführung trennt die Abdeckung eine Oberseite der Verbrennungskraftmaschine räumlich von einer Umgebung ab. Die Verbrennungskraftmaschine ist in aller Regel in unmittelbarer räumlicher Nähe zu dem Korntank angeordnet, sodass die Anordnung der Abdeckung oberhalb der Verbrennungskraftmaschine zwecks Erreichens des Korntanks über die Abdeckung in aller Regel besonders günstig ist.

Bei dieser Ausgestaltung kann es weiterhin vorteilhaft sein, wenn der Festabschnitt der Abdeckung der Verbrennungskraftmaschine zugeordnet ist, sodass die Oberseite der Verbrennungskraftmaschine unabhängig von der Stellung des Bewegungsabschnitts mittels der Abdeckung abgedeckt ist. Mit anderen Worten ist die Verbrennungskraftmaschine auch dann mittels der Abdeckung abgedeckt, wenn sich der Bewegungsabschnitt in seiner Wartungsstellung befindet. Bei dieser Ausgestaltung befindet sich der Bewegungsabschnitt vorteilhafterweise in einem Seitenbereich der Abdeckung, der sich seitlich neben einer Projektion der Verbrennungskraftmaschine auf die Abdeckebene befindet. Folglich befindet sich bei Vorliegen des Bewegungsabschnitts in dessen Normalstellung die Verbrennungskraftmaschine nicht unmittelbar unterhalb des Bewegungsabschnitts.

Sofern eine vorstehend beschriebene Aufstiegseinrichtung an dem Mähdrescher vorhanden ist, ist es besonders von Vorteil, wenn der Bewegungsabschnitt der Abdeckung der Aufstiegseinrichtung räumlich zugeordnet ist. Diese Zuordnung ist der Art, dass der Maschinenführer im Zuge des Aufstiegs auf die Abdeckung mittels der Aufstiegseinrichtung die Bewegungseinrichtung ausgehend von der Aufstiegseinrichtung bedienen kann. Auf diese Weise wird der Maschinenführer in die Lage versetzt, die Bewegungseinrichtung von der Aufstiegseinrichtung aus in ihre Wartungsstellung zu bewegen.

Vorteilhafterweise umfasst die Aufstiegseinrichtung eine Mehrzahl von Stufen, sodass zumindest ein Teil der Aufstiegseinrichtung treppenartig ausgebildet ist. Bei dieser Ausgestaltung ist es sonders vorteilhaft, wenn mindestens eine dieser Stufen unterhalb des Bewegungsabschnitts angeordnet ist, sodass die jeweilige Stufe zumindest bei Vorliegen des Bewegungsabschnitts in dessen Normalstellung von dem Bewegungsabschnitt abgedeckt ist. Bei dieser Ausgestaltung erfordert das vollständige Aufsteigen des Maschinenführers auf die Abdeckung die Überführung des Bewegungsabschnitts in dessen Wartungsstellung, um zumindest die letzte Stufe der Aufstiegseinrichtung freizugeben, die es bedarf, um auf die Oberseite der Abdeckung steigen zu können. Folglich ist der Aufstieg auf die Abdeckung nur dadurch möglich, dass der Bewegungsabschnitt in seine Wartungsstellung überführt wird, wodurch gezwungenermaßen die gewünschte Sicherung für eine sichere Nutzung der Abdeckung als begehbare Plattform zur Erreichung des Korntanks hergestellt wird. Dies liegt darin begründet, dass der Bewegungsabschnitt im Zuge seiner Bewegung in die Wartungsstellung mittels des daran angeordneten Handlaufelements unmittelbar zur Verfügung steht, sobald er seine Wartungsstellung erreicht.

Wie vorstehend bereits ausgeführt, ist die Abdeckung in einer besonders vorteilhaften Ausgestaltung des erfindungsgemäßen Mähdreschers von einer Hohlprofilstruktur gebildet. Diese bietet gegenüber im Stand der Technik bekannten Ausgestaltungen von Abdeckungen, die in aller Regel einfachen Blechen gebildet sind, den Vorteil, dass die Steifigkeit hinsichtlich einer Plattentragwirkung deutlich erhöht ist. Ein weiterer Vorteil besteht darin, dass bei der Fertigung der Abdeckung zumindest weitestgehend, vorzugsweise vollständig, auf Schweißverbindungen verzichtet werden kann, die in der Fertigung bekannter Abdeckungen zu der Ausbildung erheblicher Eigenspannungen und einem daraus resultierenden Verzug der jeweiligen Abdeckung führen können. Infolgedessen sind im Stand der Technik häufig unebene Flächen gegeben, die hinsichtlich einer Nutzung der Abdeckung als begehbare Plattform nachteilig sind. Insbesondere führen etwaige Unebenheiten zu der Ansammlung von Staub und Wasser auf der Abdeckung, deren Vermeidung vorteilhaft ist. Zudem erschwert eine geringe Maßhaltigkeit der Abdeckung den Einsatz von Dichtungen, da diese in aller Regel zumindest bereichsweise nicht ihren vorgesehenen Dichtsitz erreichen.

Eine von einer Hohlprofilstruktur gebildete Abdeckung kann im Gegensatz dazu von einem oder einer Mehrzahl von Hohlprofilelementen gebildet sein, die von Strangpressprofilen gebildet sind. Die Verbindung einzelner Hohlprofilelemente kann besonders einfach mittels Verbindungsprofilen erfolgen, sodass auf den Einsatz von Schweißverbindungen vollständig verzichtet werden kann. Entlang der Ränder der Abdeckung können vorteilhafterweise Randabschlussprofile eingesetzt werden, die einen seitlichen Abschluss der Abdeckung herstellen. Eine derartige Konstruktion weist bei hoher Maßhaltigkeit und hoher Tragfähigkeit eine vergleichsweise geringe Masse auf.

Vorteilhafterweise ist die Abdeckung zumindest im Wesentlichen, vorzugsweise vollständig, von Aluminium gebildet. Dies begünstigt sowohl die Korrosionsbeständigkeit als auch die Masse der Abdeckung. Eine geringe Masse ist im Interesse eines möglichst leicht bewegbaren Bewegungsabschnitts von Interesse, sodass die Bewegung des letzteren vorteilhafterweise ausschließlich mittels Muskelkraft des Maschinenführers möglich ist. Da die Bewegung des Bewegungsabschnitts als solche bereits in einer beträchtlichen Höhe oberhalb des Untergrundes stattfindet, begünstigt eine geringe Masse des Bewegungsabschnitts zudem dessen sichere Bewegung unter einem möglichst geringen Kraftaufwand. Grundsätzlich ist es gleichwohl denkbar, einen jeweiligen Bewegungsabschnitt unabhängig von seiner übrigen Ausgestaltung mit einem Antrieb zu kombinieren, mittels dessen zumindest eine Hilfskraft auf den Bewegungsabschnitt ausübbar ist, die die Bewegung des Bewegungsabschnitts in Richtung von dessen Wartungsstellung zumindest unterstützt, vorzugsweise eigenständig bewältigen kann. Für die umgekehrte Bewegung des Bewegungsabschnitts in Richtung seiner Normalstellung kann es zudem sinnvoll sein, an dem Bewegungsabschnitt mindestens einen Dämpfer anzuordnen. Auf diese Weise wird ein unbeabsichtigtes "Herunterschlagen" des Bewegungsabschnitts vermieden.

Die zugrunde liegende Aufgabe wird weiterhin mittels eines Verfahrens zur Wartung eines Korntanks mit den Merkmalen des Anspruchs 15 gelöst. Dieses Verfahren sieht die folgenden Verfahrensschritte vor:
a) Im Zuge eines Aufstiegs eines Maschinenführers des Mähdreschers auf eine Oberseite eines Gehäuses des Mähdreschers wird ein Bewegungsabschnitt einer Abdeckung des Gehäuses relativ zu einem Festabschnitt der Abdeckung bewegt und auf diese Weise ausgehend von einer Normalstellung in eine Wartungsstellung überführt.
b) Mittels der Bewegung des Bewegungsabschnitts in dessen Wartungsstellung wird ein Handlaufelement, das an dem Bewegungsabschnitt angeordnet ist, derart relativ zu einer Oberseite der Abdeckung positioniert, dass es als Handlauf für den Maschinenführer zur Verfügung steht, sodass dieser sich unter Zuhilfenahme des Handlaufelements sicher auf der Abdeckung in Richtung eines Korntanks bewegen kann, der an die Abdeckung grenzt.

Das erfindungsgemäße Verfahren ist mittels des erfindungsgemäßen Mähdreschers besonders einfach durchführbar. Die sich hieraus ergebenden Vorteile sind vorstehend bereits dargelegt. Insbesondere kann auf besonders einfache Art und Weise eine Sicherung für eine Begehung der Abdeckung bereitgestellt werden, die lediglich im Wartungsfall betreffend den Korntank an der Oberfläche des Mähdreschers hervor ragt und im Übrigen derart in der Abdeckung versenkt ist, dass die Bauhöhe des Mähdreschers bei Vorliegen des Bewegungsabschnitts in seiner Normalstellung unverändert bleibt.

Die Erfindung ist nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher, bei dem ein Bewegungsabschnitt einer Abdeckung sich in einer Normalstellung befindet,
- Fig. 2:: Den Querschnitt gemäß Figur 1, wobei sich der Bewegungsabschnitt in einer Wartungsstellung befindet,
- Fig. 3:: Eine perspektivische Ansicht einer Oberseite des Mähdreschers gemäß Figur 1, wobei sich der Bewegungsabschnitt in seiner Wartungsstellung befindet,
- Fig. 4:: Eine weitere perspektivische Ansicht der Oberseite gemäß Figur 3 und
- Fig. 5:: Ein Querschnitt durch die Abdeckung, die von einer Hohlprofilstruktur gebildet ist.

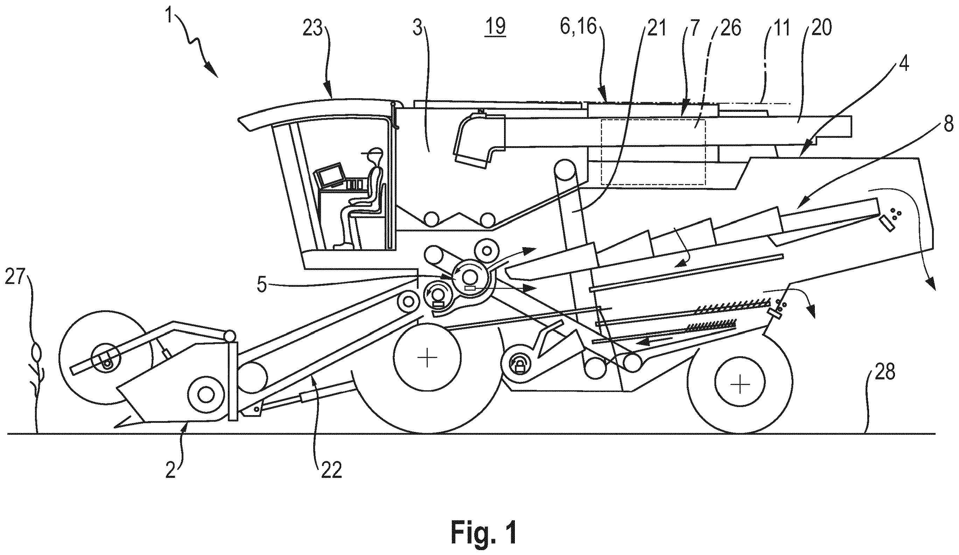

Ein Ausführungsbeispiel, das in den **Figuren 1 bis 5** dargestellt ist, umfasst einen erfindungsgemäßen Mähdrescher **1.** Dieser ist mit einer Mehrzahl von Arbeitsorganen ausgestattet, wobei hier beispielhaft ein Schneidwerk **2** zum bodennahen Abschneiden zu erntender Pflanzen **27,** ein Schrägförderer **22** zur Beförderung der geschnittenen Pflanzen in Richtung eines Dreschorgans **5,** das Dreschorgan **5** zur Abtrennung von Früchten von Pflanzenresten der geernteten Pflanzen sowie eine Trenneinrichtung **8** zur Trennung der abgelösten Früchte von den Pflanzenresten. Eine Vielzahl der Arbeitsorgane des Mähdreschers **1** sind in einem Gehäuse **4** des Mähdreschers **1** eingehaust. Das Gehäuse **4** dient zur räumlichen Einfassung von Maschinenteilen des Mähdreschers **1.** An seiner Front umfasst der Mähdrescher **1** eine Fahrerkabine **23,** von der aus ein Maschinenführer den Mähdrescher **1** steuern kann.

Die abgelösten Früchte werden nach ihrer Trennung von den Pflanzenresten schließlich zwecks temporärer Lagerung mittels einer Fördereinrichtung **21** in einen Korntank **3** gefördert, der an einer Oberseite **19** des Gehäuses **4** angeordnet ist. Ausgehend von dem Korntank **3** können die Früchte mittels eines Entladerüssels **20** abtransportiert werden. Typischerweise findet eine Entleerung des Korntanks **3** in ein gesondertes Transportfahrzeug statt. Der Mähdrescher **1** verfügt weiterhin über eine Verbrennungskraftmaschine **26,** die in dem gezeigten Beispiel unmittelbar neben dem Korntank **3** angeordnet ist. Die Verbrennungskraftmaschine **26** dient zur Bereitstellung von Antriebsenergie zum Betrieb der verschiedenen Arbeitsorgane sowie zum Vortrieb des Mähdreschers **1.** Die Verbrennungskraftmaschine **26** ist an ihrer Oberseite **7** mittels einer Abdeckung **6** räumlich von einer Umgebung getrennt. Die Abdeckung **6** ist hier derart ausgerichtet, dass sich ihre Abdeckebene **11** zumindest im Wesentlichen horizontal erstreckt.

In regelmäßigen zeitlichen Abständen ist es erforderlich, den Korntank **3** zu warten. Zwecks Wartung ist es wiederum erforderlich, den Korntank **3** zu begehen, das heißt in den Korntank **3** zu steigen. Es hat sich in der Praxis als üblich und vorteilhaft herausgestellt, den Korntank **3** über die seitlich an den Korntank **3** angrenzende Abdeckung **6,** die an der Oberseite **19** des Gehäuses **4** angeordnet ist, zu erreichen. Bei dieser Abdeckung **6** handelt es sich in dem gezeigten Beispiel um diejenige Abdeckung **6,** die zur räumlichen Trennung der Oberseite **7** der Verbrennungskraftmaschine **26** von der Umgebung genutzt wird. Besagte Abdeckung **6** erstreckt sich bis an den Korntank **3** heran und grenzt mithin an den Korntank **3.** Die Abdeckung **6** dient insoweit als begehbare Plattform, von der ausgehend der Korntank **3** besonders einfach erreichbar ist. Hierzu verfügt der Mähdrescher **1** über eine Aufstiegseinrichtung **15,** mittels derer es möglich ist, eine Oberseite **16** der Abdeckung **6** von einem darunterliegenden Höhenniveau zu erreichen. Insbesondere kann der Mähdrescher **1** auf einem Höhenniveau der Fahrerkabine **23** eine Zwischenplattform aufweisen, von der ausgehend die Aufstiegseinrichtung **15** zu der Abdeckung **6** führt. Die Aufstiegseinrichtung **15** kann beispielsweise von einer Leiter und/oder einer Treppe gebildet sein. Besonders bevorzugt ist eine Kombination, wobei beispielsweise ein erster Abschnitt der Aufstiegseinrichtung **15** von einer Leiter und ein zweiter Abschnitt der Aufstiegseinrichtung **15** von einer Treppe gebildet ist, die eine Mehrzahl von Stufen **24** umfasst.

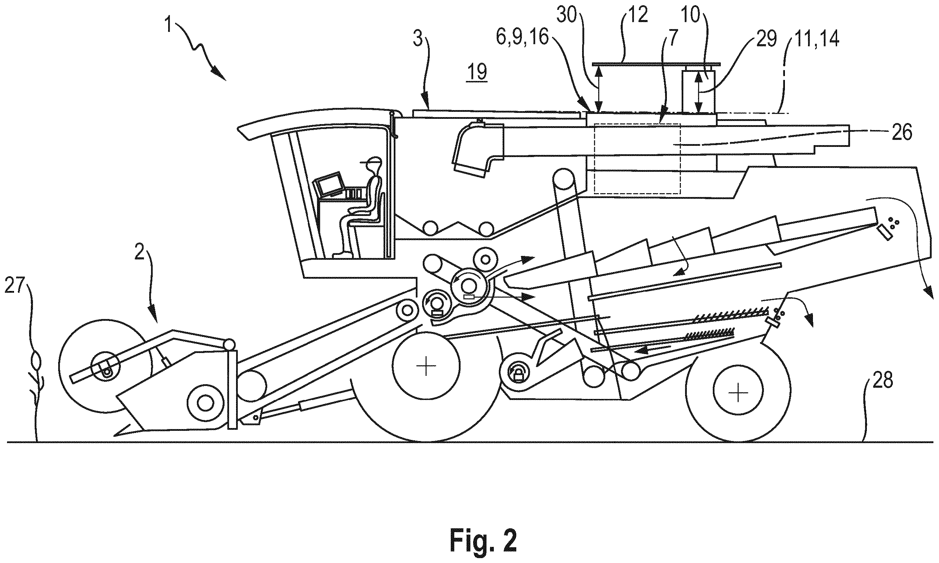

Erfindungsgemäß ist die Abdeckung **6** in dem gezeigten Beispiel von einem Festabschnitt **9** und einem Bewegungsabschnitt **10** gebildet. Der Bewegungsabschnitt **10** ist dadurch gekennzeichnet, dass er relativ zu dem Festabschnitt **9** bewegbar ist, sodass er zwischen einer Normalstellung und einer Wartungsstellung überführbar ist. Bei Vorliegen in seiner Normalstellung schließt der Bewegungsabschnitt **10** bündig mit dem Festabschnitt **9** ab, sodass die Abdeckung **6** insgesamt eine ebene Plattform bildet. Mit anderen Worten liegt der Bewegungsabschnitt **10** bei Vorliegen in seiner Normalstellung ebenso wie der Festabschnitt **9** in der Abdeckebene **11.** Dies ist in **Figur 1** dargestellt. Mittels Überführung in seine Wartungsstellung wird der Bewegungsabschnitt **10** gleichwohl aus der Abdeckebene **11** heraus bewegt, sodass er bei Erreichen der Wartungsstellung über die Abdeckebene **11** hinaus vorsteht. Dies ist in den **Figuren 2 bis 4** veranschaulicht. In dem gezeigten Beispiel ist der Bewegungsabschnitt **10** um eine Schwenkachse **14** relativ zu dem Festabschnitt **9** verschwenkbar. Bei Vorliegen in seiner Wartungsstellung ist er um 90° gegenüber der Normalstellung verschwenkt. In dieser Wartungsstellung ist er mittels einer Arretiereinrichtung **13** arretierbar, sodass eine unbeabsichtigte Bewegung des Bewegungsabschnitts **10** zurück in seine Normalstellung verhindert ist.

In einem dem Festabschnitt **9** abgewandten Endbereich wirkt der Bewegungsabschnitt **10** mit einem Handlaufelement **12** zusammen, das hier von einem lang gestreckten Rohr gebildet ist. Diese Ausgestaltung erlaubt es, dass der Bewegungsabschnitt **10** gemeinsam mit dem Handlaufelement **12** bei Vorliegen in seiner Wartungsstellung zur Sicherung eines auf der Oberseite **16** der Abdeckung **6** befindlichen Maschinenführers dient. Um dies zu erreichen, beträgt eine senkrecht zu der Schwenkachse **14** gemessene Länge **29** des Bewegungsabschnitts **10** hier ca. 1,50 m. Infolgedessen befindet sich das Handlaufelement **12** bei Vorliegen des Bewegungsabschnitts **10** in dessen Wartungsstellung in einem Abstand **30** oberhalb der Abdeckebene **11,** der hier ca. 1,55 m beträgt. Somit ist es den Maschinenführer möglich, bei Aufstehen auf der Abdeckung **6** das Handlaufelement **12** sicher zu greifen und hierdurch seinen Stand auf der Abdeckung **6** zu sichern. Hierdurch wird erreicht, dass der Maschinenführer den Korntank **3** sicher erreichen kann, das heißt ein Absturzrisiko von der Abdeckung **6** deutlich reduziert ist. Letzteres ist aufgrund der beträchtlichen Höhe, in der sich die Abdeckung **6** oberhalb eines Untergrundes **28** findet, bedeutsam.

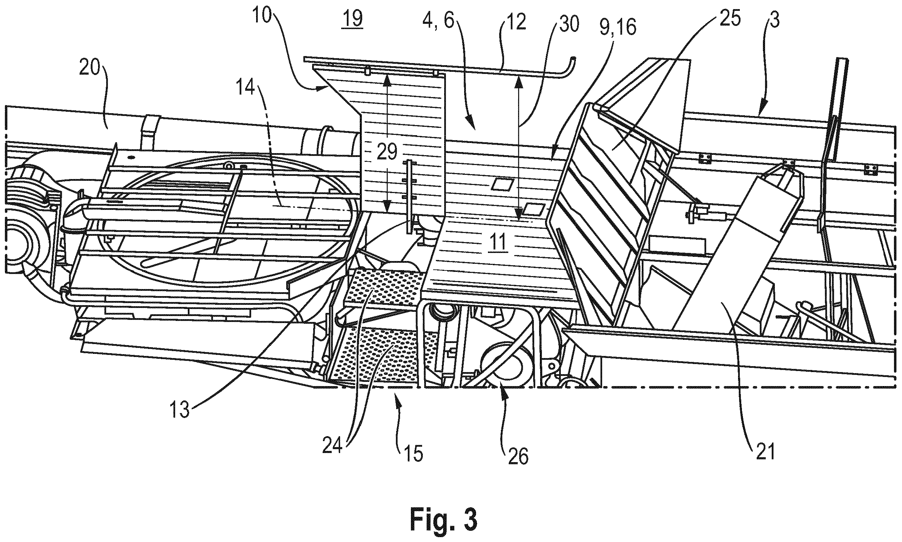

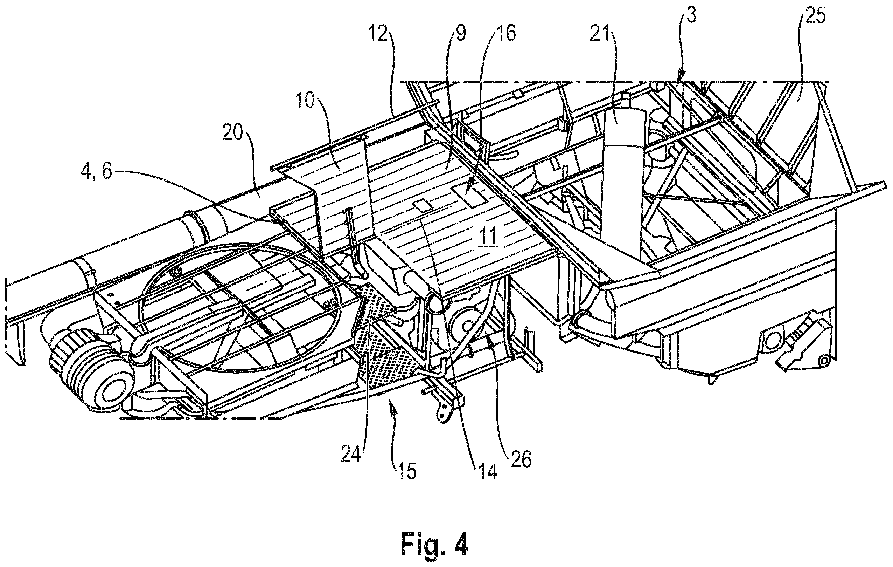

Wie sich insbesondere anhand der **Figuren 3** **und** **4** ergibt, ist der Bewegungsabschnitt **10** der hier gezeigten Abdeckung **6** in einem Seitenbereich der Abdeckung **6** angeordnet, wobei die Oberseite **7** der Verbrennungskraftmaschine **26** vollständig mittels des Festabschnitts **9** der Abdeckung **6** von der Umgebung getrennt ist. Mit anderen Worten ist der Bewegungsabschnitt **10** seitlich neben einer Projektion der Verbrennungskraftmaschine **26** in die Abdeckebene **11** angeordnet. Dies hat den Vorteil, dass die Verbrennungskraftmaschine **26** selbst dann vollständig mittels der Abdeckung **6** abgedeckt ist, wenn sich der Bewegungsabschnitt **10** in seiner Wartungsstellung befindet. Weiterhin ist die Abdeckung **6** in dem gezeigten Beispiel derart ausgeführt, dass sich zwei Stufen **24** der Aufstiegseinrichtung **15** unterhalb des Bewegungsabschnitts **10** befinden. Diese Stufen **24** sind mithin nur dadurch freigebbar, dass der Bewegungsabschnitt **10** in seine in den **Figuren 3** **und** **4** gezeigt Wartungsstellung überführt wird. Dies hat den Vorteil, dass die Bewegung des Bewegungsabschnitts **10** in seine Wartungsstellung gewissermaßen "automatisch" vorgenommen wird, wenn die Abdeckung **6** bestiegen werden soll. Folglich wird sichergestellt, dass das Handlaufelement **12** zur Sicherung des Maschinenführers immer nutzbar ist, wenn dieser auf die Abdeckung **6** steigen möchte.

In besonders bevorzugter Weise erstreckt sich das Handlaufelement **12** über den Bewegungsabschnitt **10** hinaus in Richtung des Korntanks **3.** Dies hat den Vorteil, dass das Handlaufelement **12** auch in einem Bereich des Festabschnitts **9** wirken kann, obgleich es lediglich an dem Bewegungsabschnitt **10** angeordnet ist. Vorzugsweise erstreckt sich das Handlaufelement **12** bis an eine Seitenwand **25** des Korntanks **3,** sodass dem Maschinenführer auf der gesamten Strecke zwischen der Aufstiegseinrichtung **15** und dem Korntank **3** das Handlaufelement **12** zur Verfügung steht.

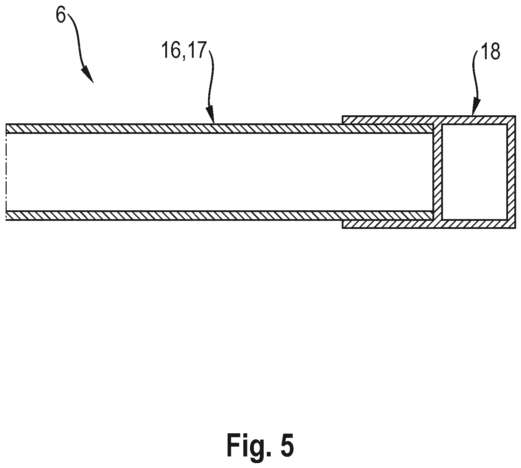

Die Abdeckung **6** ist in dem gezeigten Beispiel in besonders bevorzugter Weise von einer Hohlprofilstruktur **17** gebildet, die sich insbesondere anhand von **Figur 5** ergibt. Diese umfasst eine Mehrzahl miteinander verbundener Hohlprofilelemente, die hier von Aluminiumstrangpressprofilen gebildet sind. Eine derartige Hohlprofilstruktur **17** ist besonders leicht und korrosionsbeständig. Insbesondere die geringe Masse ist hinsichtlich der gewünschten Bewegung des Bewegungselements **10** in dessen Wartungsstellung vorteilhaft, sodass der Maschinenführer das Bewegungselement **10** besonders einfach anheben und auf diese Weise in die Wartungsstellung überführen kann. Zudem bietet die Hohlprofilstruktur **17** den Vorteil, dass sie ohne Schweißverbindungen und entsprechend einen dadurch bedingten Verzug auskommt. Entsprechend ist die Abdeckung **6** des gezeigten Beispiels besonders maßhaltig, was insbesondere die Abdichtung der Abdeckung **6** gegen das übrige Gehäuse **4** vereinfacht. Randseitig ist die Hohlprofilstruktur **17** mit Randabschlussprofil in **18** eingefasst.

### Bezugszeichenliste

- 1: Mähdrescher
- 2: Schneidorgan
- 3: Korntank
- 4: Gehäuse
- 5: Dreschorgan
- 6: Abdeckung
- 7: Oberseite
- 8: Trenneinrichtung
- 9: Festabschnitt
- 10: Bewegungsabschnitt
- 11: Abdeckebene
- 12: Handlaufelement
- 13: Arretiereinrichtung
- 14: Schwenkachse
- 15: Aufstiegseinrichtung
- 16: Oberseite
- 17: Hohlprofilstruktur
- 18: Randabschlussprofil
- 19: Oberseite
- 20: Entladerüssel
- 21: Fördereinrichtung
- 22: Schrägförderer
- 23: Fahrerkabine
- 24: Stufe
- 25: Seitenwand
- 26: Verbrennungskraftmaschine
- 27: Pflanze
- 28: Untergrund
- 29: Länge
- 30: Abstand

## Patentansprüche

1. Selbstfahrender Mähdrescher (1), umfassend
- ein Gehäuse (4),
- ein Dreschorgan (5), mittels dessen derart Früchte von geschnittenen Pflanzen ablösbar sind, dass die Früchte sodann losgelöst von Pflanzenresten der geschnittenen Pflanzen vorliegen,
- einen Korntank (3) zur zumindest temporären Zwischenlagerung abgelöster Früchte sowie
- eine Fördereinrichtung (21) zur Förderung abgelöster Früchte in den Korntank (3),
wobei das Gehäuse (4) an seiner Oberseite (19) eine horizontal ausgerichtete Abdeckung (6) aufweist,
**dadurch gekennzeichnet, dass**
die Abdeckung (6) mindestens einen Festabschnitt (9) und mindestens einen relativ zu dem Festabschnitt (9) zwischen einer Normalstellung und einer Wartungsstellung bewegbaren Bewegungsabschnitt (10) umfasst,
wobei der Bewegungsabschnitt (10) bei Vorliegen in seiner Normalstellung gemeinsam mit dem Festabschnitt (9) in einer Abdeckebene (11) der Abdeckung (6) liegt und bei Vorliegen in seiner Wartungsstellung über die Abdeckebene (11) hinaus vorsteht,
wobei der Bewegungsabschnitt (10) mit einem Handlaufelement (12) verbunden ist, das zumindest bei Vorliegen des Bewegungsabschnitts (10) in dessen Wartungsstellung in einem von dem Festabschnitt (9) abgewandten Endbereich des Bewegungsabschnitts (10) angeordnet ist.

2. Mähdrescher (1) nach Anspruch 1, **gekennzeichnet durch** mindestens eine Arretiereinrichtung (13), mittels derer der Bewegungsabschnitt (10) zumindest bei Vorliegen in seiner Wartungsstellung relativ zu dem Festabschnitt (9) arretierbar ist.

3. Mähdrescher (1) nach Anspruch 1 oder 2, **dadurch gekennzeichnet, dass** die Abdeckung (6) zumindest teilweise oberhalb einer Verbrennungskraftmaschine (26) angeordnet ist, sodass die Abdeckung (6) eine Oberseite (7) die Verbrennungskraftmaschine (26) räumlich von einer Umgebung trennt.

4. Mähdrescher (1) nach Anspruch 3, **dadurch gekennzeichnet, dass** der Festabschnitt (9) der Verbrennungskraftmaschine (26) zugeordnet ist, sodass die Oberseite (7) der Verbrennungskraftmaschine (26) unabhängig von einer Stellung des Bewegungsabschnitts (10) mittels der Abdeckung (6) abgedeckt ist.

5. Mähdrescher (1) nach Anspruch 3 oder 4, **dadurch gekennzeichnet, dass** der Bewegungsabschnitt (10) in einem Seitenbereich der Abdeckung (6) angeordnet ist, der sich seitlich neben einer Projektion der Verbrennungskraftmaschine (26) auf die Abdeckebene (11) befindet.

6. Mähdrescher (1) nach einem der Ansprüche 1 bis 5, **dadurch gekennzeichnet, dass** die Abdeckung (6) räumlich an den Korntank (3) grenzt, sodass ein Maschinenführer des Mähdreschers (1) den Korntank (3) über die Abdeckung (6) erreichen kann.

7. Mähdrescher (1) nach einem der Ansprüche 1 bis 6, **dadurch gekennzeichnet, dass** sich das Handlaufelement (12) über den Bewegungsabschnitt (10) hinaus in Richtung des Korntanks (3) erstreckt.

8. Mähdrescher (1) nach einem der Ansprüche 1 bis 7, **dadurch gekennzeichnet, dass** der Bewegungsabschnitt (10) relativ zu dem Festabschnitt (9) verschwenkbar ist, vorzugsweise um eine zu der Abdeckebene (11) parallele Schwenkachse (14).

9. Mähdrescher (1) nach einem der Ansprüche 1 bis 8, **gekennzeichnet durch** eine Aufstiegseinrichtung (15), mittels derer ein Maschinenführer des Mähdreschers (1)von einem unterhalb der Abdeckung (6) befindlichen Höhenniveau auf eine Oberseite (16) der Abdeckung (6) aufsteigen kann.

10. Mähdrescher (1) nach Anspruch 9, **dadurch gekennzeichnet, dass** der Bewegungsabschnitt (10) derart räumlich der Aufstiegseinrichtung (15) zugeordnet ist, dass der Maschinenführer im Zuge des Aufstiegs auf die Abdeckung (6) die Bewegungseinrichtung (10) ausgehend von der Aufstiegseinrichtung (15) bedienen und auf diese Weise ausgehend von ihrer Normalstellung in Richtung ihrer Wartungsstellung bewegen kann.

11. Mähdrescher (1) nach Anspruch 9 oder 10, **dadurch gekennzeichnet, dass** die Aufstiegseinrichtung (15) eine Mehrzahl von Stufen (24) umfasst, wobei vorzugsweise mindestens eine Stufe (24) derart unterhalb des Bewegungsabschnitts (10) angeordnet ist, dass sie bei Vorliegen des Bewegungsabschnitts (10) in dessen Normalstellung von dem Bewegungsabschnitt (10) abgedeckt ist.

12. Mähdrescher (1) nach einem der Ansprüche 1 bis 11, **dadurch gekennzeichnet, dass** die Abdeckung (6) zumindest teilweise, vorzugsweise vollständig, von einer Hohlprofilstruktur (17) gebildet ist.

13. Mähdrescher (1) nach Anspruch 12, **gekennzeichnet durch** mindestens ein randseitig an der Hohlprofilstruktur (17) angeordnetes Randabschlussprofil (18).

14. Mähdrescher (1) nach einem der Ansprüche 1 bis 13, **dadurch gekennzeichnet, dass** die Abdeckung (6) von Aluminium gebildet ist.

15. Verfahren zur Wartung eines Korntanks (3) eines Mähdreschers (1) nach einem der Ansprüche 1 bis 14, **gekennzeichnet durch** die folgenden Verfahrensschritte:
a) Im Zuge eines Aufstiegs eines Maschinenführers des Mähdreschers (1) auf eine Oberseite (19) eines Gehäuses (4) des Mähdreschers (1) wird ein Bewegungsabschnitt (10) einer Abdeckung (6) des Gehäuses (4) relativ zu einem Festabschnitt (9) der Abdeckung (6) bewegt und auf diese Weise ausgehend von einer Normalstellung in eine Wartungsstellung überführt.
b) Mittels der Bewegung des Bewegungsabschnitts (10) in dessen Wartungsstellung wird ein Handlaufelement (12), das an dem Bewegungsabschnitt (10) angeordnet ist, derart relativ zu einer Oberseite (16) der Abdeckung (6) positioniert, dass es als Handlauf für den Maschinenführer zur Verfügung steht, sodass dieser sich unter Zuhilfenahme des Handlaufelements (12) sicher auf der Abdeckung (6) in Richtung eines Korntanks (3) bewegen kann, der an die Abdeckung (6) grenzt.

## Claims

1. A self-propelled combine harvester (1) including
- a housing (4),
- a threshing member (5), by means of which crops can be detached from cut plants in such a way that the crops are then in a state of being detached from plant residues of the cut plants,
- a grain tank (3) for at least temporary intermediate storage of detached crops, and
- a conveyor device (21) for conveying detached crops into the grain tank (3),
wherein the housing (4) has a horizontally oriented cover (6) at its top side (19),
**characterised in that**
the cover (6) includes at least one fixed portion (9) and at least one movement portion (10) moveable relative to the fixed portion (9) between a normal position and a maintenance position,
wherein the movement portion (10) when in its normal position jointly with the fixed portion (9) lies in a cover plane (11) of the cover (6) and when in its maintenance position projects beyond the cover plane (11),
wherein the movement portion (10) is connected to a handrail element (12) which at least when the movement portion (10) is in the maintenance position thereof is arranged in an end region of the movement portion (10), that faces away from the fixed portion (9).

2. A combine harvester (1) according to claim 1 **characterised by** at least one arresting device (13), by means of which the movement portion (10) can be arrested at least when it is in its maintenance position relative to the fixed portion (9).

3. A combine harvester (1) according to claim 1 or claim 2 **characterised in that** the cover (6) is arranged at least partially above an internal combustion engine (26) so that the cover (6) spatially separates a top side (7) of the internal combustion engine (26) from a surroundings.

4. A combine harvester (1) according to claim 3 **characterised in that** the fixed portion (9) is associated with the internal combustion engine (26) so that the top side (7) of the internal combustion engine (26) is covered by means of the cover (6) independently of a position of the movement portion (10).

5. A combine harvester (1) according to claim 3 or claim 4 **characterised in that** the movement portion (10) is arranged in a side region of the cover (6), that is disposed laterally beside a projection of the internal combustion engine (26) on to the cover plane (11).

6. A combine harvester (1) according to one of claims 1 to 5 **characterised in that** the cover (6) spatially adjoins the grain tank (3) so that a machine operator of the combine harvester (1) can reach the grain tank (3) by way of the cover (6).

7. A combine harvester (1) according to one of claims 1 to 6 **characterised in that** the handrail element (12) extends beyond the movement portion (10) in the direction of the grain tank (3).

8. A combine harvester (1) according to one of claims 1 to 7 **characterised in that** the movement portion (10) is pivotable relative to the fixed portion (9), preferably about a pivot axis (14) parallel to the cover plane (11).

9. A combine harvester (1) according to one of claims 1 to 8 **characterised by** a climbing device (15), by means of which a machine operator of the combine harvester (1) can climb from a height level below the cover (6) on to a top side (16) of the cover (6).

10. A combine harvester (1) according to claim 9 **characterised in that** the movement portion (10) is spatially associated with the climbing device (15) in such a way that the machine operator in the course of climbing on to the cover (6) can operate the movement portion (10) from the climbing device (15) and **in that** way can move it from its normal position in the direction of its maintenance position.

11. A combine harvester (1) according to claim 9 or claim 10 **characterised in that** the climbing device (15) includes a plurality of steps (24), wherein preferably at least one step (24) is arranged below the movement portion (10) in such a way that when the movement portion (10) is in its normal position it is covered by the movement portion (10).

12. A combine harvester (1) according to one of claims 1 to 11 **characterised in that** the cover (6) is at least partially and preferably completely formed by a hollow profile structure (17).

13. A combine harvester (1) according to claim 12 **characterised by** at least one edge termination profile (18) arranged at the edge on the hollow profile structure (17).

14. A combine harvester (1) according to one of claims 1 to 13 **characterised in that** the cover (6) is formed by aluminium.

15. A method of maintaining a grain tank (3) of a combine harvester (1) according to one of claims 1 to 14 **characterised by** the following method steps:
a) in the course of a machine operator of the combine harvester (1) climbing on to a top side (19) of a housing (4) of the combine harvester (1) a movement portion (10) of a cover (6) of the housing (4) is moved relative to a fixed portion (9) of the cover (6) and in that way is transferred from a normal position into a maintenance position, and
b) by the movement of the movement portion (10) into its maintenance position a handrail element (12) which is arranged on the movement portion (10) is positioned relative to a top side (16) of the cover (6) in such a way that it is available as a handrail for the machine operator so that he can move safely by means of the handrail element (12) on the cover (6) in the direction of a grain tank (3) which adjoins the cover (6).

## Revendications

1. Moissonneuse-batteuse automotrice (1) incluant
- un carter (4),
- un organe de battage (5) au moyen duquel des fruits sont détachables de plantes coupées, de façon que les fruits soient ensuite présents en étant débarrassés de restes de plantes des plantes coupées,
- une trémie à grain (3) pour le stockage intermédiaire au moins temporaire de fruits détachés ainsi que
- un équipement de convoyage (21) pour convoyer des fruits détachés vers la trémie à grain (3),
le carter (4) comportant sur son dessus (19) un moyen de recouvrement orienté horizontalement (6),
**caractérisée en ce que**
le moyen de recouvrement (6) inclut au moins une portion fixe (9) et au moins une portion mobile (10) mobile par rapport à la portion fixe (9) entre une position normale et une position d'entretien,
la portion mobile (10), lorsqu'elle est dans sa position normale, se trouve dans un plan de recouvrement (11) du moyen de recouvrement (6) conjointement avec la portion fixe (9) et, lorsqu'elle est dans sa position d'entretien, dépasse du plan de recouvrement (11),
la portion mobile (10) étant reliée à un élément de main courante (12) qui, au moins lorsque la portion mobile (10) est dans sa position d'entretien, est disposé dans une zone d'extrémité de la portion mobile (10) située à l'opposé de la portion fixe (9).

2. Moissonneuse-batteuse (1) selon la revendication 1, **caractérisée par** au moins un équipement de blocage (13) au moyen duquel la portion mobile (10), au moins lorsqu'elle est dans sa position d'entretien, est blocable par rapport à la portion fixe (9).

3. Moissonneuse-batteuse (1) selon la revendication 1 ou 2, **caractérisée en ce que** le moyen de recouvrement (6) est disposé au moins en partie au-dessus d'un moteur à combustion interne (26), de sorte que le moyen de recouvrement (6) sépare spatialement un dessus (7) le moteur à combustion interne (26) d'un environnement.

4. Moissonneuse-batteuse (1) selon la revendication 3, **caractérisée en ce que** la portion fixe (9) est associée au moteur à combustion interne (26), de sorte que le dessus (7) du moteur à combustion interne (26) est recouvert à l'aide du moyen de recouvrement (6) indépendamment d'une position de la portion mobile (10).

5. Moissonneuse-batteuse (1) selon la revendication 3 ou 4, **caractérisée en ce que** la portion mobile (10) est disposée dans une zone latérale du moyen de recouvrement (6) qui se trouve latéralement à côté d'une projection du moteur à combustion interne (26) sur le plan de recouvrement (11).

6. Moissonneuse-batteuse (1) selon une des revendications 1 à 5, **caractérisée en ce que** le moyen de recouvrement (6) est spatialement adjacent à la trémie à grain (3), de sorte qu'un conducteur de machine de la moissonneuse-batteuse (1) peut atteindre la trémie à grain (3) par l'intermédiaire du moyen de recouvrement (6).

7. Moissonneuse-batteuse (1) selon une des revendications 1 à 6, **caractérisée en ce que** l'élément de main courante (12) s'étend au-delà de la portion mobile (10) en direction de la trémie à grain (3).

8. Moissonneuse-batteuse (1) selon une des revendications 1 à 7, **caractérisée en ce que** la portion mobile (10) est pivotante par rapport à la portion fixe (9), de préférence autour d'un axe de pivotement (14) parallèle au plan de recouvrement (11).

9. Moissonneuse-batteuse (1) selon une des revendications 1 à 8, **caractérisée par** un équipement de montée (15) au moyen duquel un conducteur de machine de la moissonneuse-batteuse (1) peut monter d'un niveau de hauteur se trouvant au-dessous du moyen de recouvrement (6) à un dessus (16) du moyen de recouvrement (6).

10. Moissonneuse-batteuse (1) selon la revendication 9, **caractérisée en ce que** la portion mobile (10) est associée spatialement à l'équipement de montée (15), de sorte que le conducteur de machine, au cours de la montée sur le moyen de recouvrement (6), peut manœuvrer l'équipement mobile (10) à partir de l'équipement de montée (15) et, de cette façon, le déplacer de sa position normale en direction de sa position d'entretien.

11. Moissonneuse-batteuse (1) selon la revendication 9 ou 10, **caractérisée en ce que** l'équipement de montée (15) inclut une pluralité de marches (24), de préférence au moins une marche (24) étant disposée au-dessous de la portion mobile (10), de façon que, lorsque la portion mobile (10) est dans sa position normale, elle soit recouverte par la portion mobile (10).

12. Moissonneuse-batteuse (1) selon une des revendications 1 à 11, **caractérisée en ce que** le moyen de recouvrement (6) est formé au moins en partie, de préférence entièrement, par une structure en profilé creux (17).

13. Moissonneuse-batteuse (1) selon la revendication 12, **caractérisée par** au moins un profil de fermeture de bord (18) disposé côté bord sur la structure en profilé creux (17).

14. Moissonneuse-batteuse (1) selon une des revendications 1 à 13, **caractérisée en ce que** le moyen de recouvrement (6) est formé d'aluminium.

15. Procédé d'entretien d'une trémie à grain (3) d'une moissonneuse-batteuse (1) selon une des revendications 1 à 14, **caractérisé par** les étapes de procédé suivantes :
a) Au cours de la montée d'un conducteur de machine de la moissonneuse-batteuse (1) sur un dessus (19) d'un carter (4) de la moissonneuse-batteuse (1), une portion mobile (10) d'un moyen de recouvrement (6) du carter (4) est déplacée par rapport à une portion fixe (9) du moyen de recouvrement (6) et, de cette façon, transférée à partir d'une position normale vers une position d'entretien.
b) Au moyen du déplacement de la portion mobile (10) vers sa position d'entretien, un élément de main courante (12), qui est disposé sur la portion mobile (10), est positionné par rapport à un dessus (16) du moyen de recouvrement (6) de façon à servir de main courante au conducteur de machine, de manière que à l'aide de l'élément de main courante (12), celui-ci puisse se déplacer en toute sécurité sur le moyen de recouvrement (6) en direction d'une trémie à grain (3) qui est adjacente au moyen de recouvrement (6).
